# EUROPEAN PATENT APPLICATION

(11) **EP 4 679 378 A1**
(43) Date of publication of application: **14.01.2026**
(21) Application number: 24766212.5
(22) Date of filing: 23.01.2024
(51) Int. Cl.: G06T 15/60

(54) **SHADOW RENDERING METHOD AND APPARATUS, COMPUTER DEVICE, AND STORAGE MEDIUM**

(30) Priority: 08.03.2023 CN 202310248022
(71) Applicant: TENCENT TECHNOLOGY (SHENZHEN) COMPANY LIMITED, Shenzhen, Guangdong 518057 (CN)
(72) Inventor: ZHANG, Yingpeng, Shenzhen, Guangdong 518057 (CN); JIANG, Zheng, Shenzhen, Guangdong 518057 (CN)
(74) Representative: Gunzelmann, Rainer
(86) International application number: PCT/CN2024/073598
(87) International publication number: WO 2024/183489

(57) **Abstract**

A shadow rendering method, executed by a computer device. The method comprises: setting a two-dimensional grid on a preset plane in a world space where a virtual scene is located (202); according to cells in the two-dimensional grid, clustering a plurality of light sources in the virtual scene to obtain light source clusters respectively corresponding to the cells, wherein projection areas of illumination spaces irradiated by the light sources in the light source clusters on the preset plane intersect with the cells corresponding to the light source clusters (204); for pixel points in a screen space, determining target light source clusters among the plurality of light source clusters, wherein the illumination of the target light source clusters is related to the pixel values of the pixel points (206); and rendering a shadow of the virtual scene on the basis of the respective target light source clusters of the pixel points to obtain a shadow rendering result (208).

## Description

### RELATED APPLICATION

This application claims priority to Chinese Patent Application No. 2023102480229, filed on March 8, 2023 and entitled "SHADOW RENDERING METHOD AND APPARATUS, COMPUTER DEVICE, AND STORAGE MEDIUM", which is incorporated herein by reference in its entirety.

### FIELD OF THE TECHNOLOGY

Embodiments of this application relate to the field of rendering technologies, and in particular, to a shadow rendering method and apparatus, a computer device, and a storage medium.

### BACKGROUND OF THE DISCLOSURE

With the development of computer technologies, a shadow rendering technology has emerged. The shadow rendering technology is configured for rendering a shadow, to improve sense of reality of a rendering result.

In the conventional technology, a shadow map is usually used to render a shadow. Calculation complexity of a rendering method based on the shadow map is greatly related to complexity of a scene that needs to be rendered. Higher complexity of the scene indicates a higher requirement for performance.

Therefore, in a case that a scene is complex, for example, a large quantity of light resources exist in a scene, the rendering method based on the shadow map has a problem of high calculation complexity, resulting in low shadow rendering efficiency.

### SUMMARY

According to various embodiments provided in this application, a shadow rendering method and apparatus, a computer device, a computer-readable storage medium, and a computer program product are provided, which can improve shadow rendering efficiency.

According to an aspect, this application provides a shadow rendering method. The method includes:
setting a two-dimensional grid on a preset plane in a world space where a virtual scene is located;
clustering a plurality of light resources in the virtual scene through cells in the two-dimensional grid, to obtain a light-source cluster corresponding to the cells, a projection area of an illuminated space irradiated by the light resource in the light-source cluster on the preset plane intersecting with a corresponding cell;
determining, for each pixel point in a screen space, a target light-source cluster from the plurality of light-source clusters, illumination of the target light-source cluster being related to a pixel value of the pixel point; and
rendering a shadow of the virtual scene based on the target light-source cluster of each pixel point, to obtain a shadow rendering result.

According to another aspect, this application further provides a shadow rendering apparatus. The apparatus includes:
a grid distribution module, configured to set a two-dimensional grid on a preset plane in a world space where a virtual scene is located;
a light resource clustering module, configured to cluster a plurality of light resources in the virtual scene based on cells in the two-dimensional grid, to obtain a light-source cluster corresponding to the cells, a projection area of an illuminated space irradiated by the light resource in the light-source cluster on the preset plane intersecting with the corresponding cell;
a light-source cluster matching module, configured to determine, for each pixel point in a screen space, a target light-source cluster from the plurality of light-source clusters, illumination of the target light-source cluster being related to a pixel value of the pixel point; and
a shadow rendering module, configured to render a shadow of the virtual scene based on the target light-source cluster of each pixel point, to obtain a shadow rendering result.

According to another aspect, this application further provides a computer device. The computer device includes a memory and a processor, the memory having a computer-readable instruction stored therein, the processor, when executing the computer-readable instruction, implementing the foregoing shadow rendering method.

According to another aspect, this application further provides a computer-readable storage medium. The computer-readable storage medium has a computer-readable instruction stored therein, the computer-readable instruction, when executed by a processor, implementing the foregoing shadow rendering method.

According to another aspect, this application further provides a computer program product. The computer program product includes a computer-readable instruction, the computer-readable instruction, when executed by a processor, implementing the foregoing shadow rendering method.

Details of one or more embodiments of this application are provided in the accompanying drawings and descriptions below. Other features, objectives, and advantages of this application become apparent from the specification, the accompanying drawings, and the claims. The two-dimensional grid is set.

### BRIEF DESCRIPTION OF THE DRAWINGS

To describe the technical solutions in the embodiments of this application or the related art more clearly, the following briefly describes the accompanying drawings required for describing the embodiments or the related technology. Apparently, the accompanying drawings in the following descriptions show merely some embodiments of this application, and a person of ordinary skill in the art may still derive other drawings from these accompanying drawings without creative efforts.
FIG. 1 is a diagram of an application environment of a shadow rendering method according to some embodiments.
FIG. 2 is a schematic flowchart of a shadow rendering method according to some embodiments.
FIG. 3 is a schematic diagram of a two-dimensional grid according to some embodiments.
FIG. 4 is a schematic diagram of intersection of a projection area and a cell according to some embodiments.
FIG. 5 is a schematic diagram of a bit string stored in a screen pixel shadow mask buffer according to some embodiments.
FIG. 6 is a flowchart of storing light resource reachability information through a bit string according to some embodiments.
FIG. 7 shows a real-time rendering picture obtained without rendering a shadow according to some embodiments.
FIG. 8 is a real-time rendering picture obtained by rendering a shadow according to some embodiments.
FIG. 9 is a schematic diagram of a light-source cluster corresponding to a cell according to some embodiments.
FIG. 10 is a flowchart of clustering a plurality of light resources to obtain a light-source cluster according to some embodiments.
FIG. 11 is a flowchart of performing shadow rendering by reading light resource reachability information according to some embodiments.
FIG. 12 is a schematic flowchart of a shadow rendering method according to some embodiments.
FIG. 13 is a structural block diagram of a shadow rendering apparatus according to some embodiments.
FIG. 14 is a diagram of an internal structure of a computer device according to some embodiments.
FIG. 15 is a diagram of an internal structure of a computer device according to some embodiments.

### DESCRIPTION OF EMBODIMENTS

The technical solutions in embodiments of this application are clearly and completely described in the following with reference to the accompanying drawings in the embodiments of this application. Apparently, the described embodiments are merely some rather than all of the embodiments of this application. All other embodiments obtained by a person of ordinary skill in the art based on the embodiments of this application without creative efforts shall fall within the protection scope of this application.

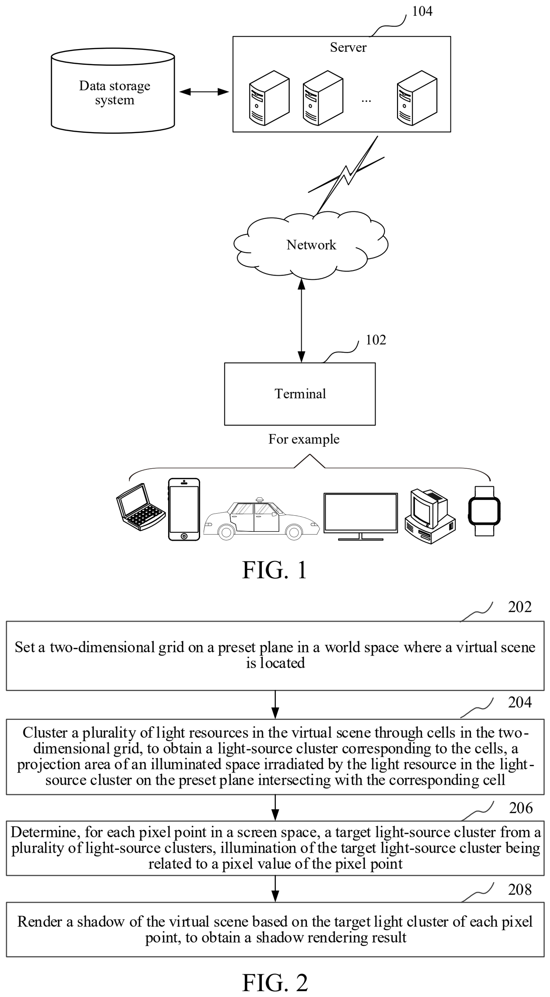

A shadow rendering method provided in the embodiments of this application may be applied to an application environment shown in FIG. 1. A terminal 102 communicates with a server 104 through a network. A data storage system may store data to be processed by the server 104. The data storage system may be integrated on the server 104, or may be arranged on the cloud or another server.

Specifically, the terminal 102 may obtain a virtual scene from the server 104. The terminal 102 may set a two-dimensional grid on a preset plane in a world space in which the virtual scene is located; cluster a plurality of light resources in the virtual scene based on cells in the two-dimensional grid, to obtain a light-source cluster corresponding to the cells, a projection area of an illuminated space irradiated by the light resource in the light-source cluster on the preset plane intersecting with the cell corresponding to the light-source cluster; determine, for each pixel point in a screen space, a target light-source cluster from the plurality of light-source clusters, illumination of the target light-source cluster being related to a pixel value of the pixel point; and render a shadow of the virtual scene based on the target light-source cluster of each pixel point, to obtain a shadow rendering result. The terminal 102 may present the shadow rendering result, or may transmit the shadow rendering result to the server 104.

The terminal 102 may be, but is not limited to, various desktop computers, notebook computers, smart phones, tablet computers, Internet of Things devices, and portable wearable devices. The Internet of Thing device may be a smart speaker, a smart television, a smart air conditioner, a smart in-vehicle device, or the like. The portable wearable device may be a smart watch, a smart bracelet, a head-mounted device, or the like. The server 104 may be an independent physical server, or may be a server cluster formed by a plurality of physical servers or a distributed system, and may further be a cloud server providing basic cloud computing services such as cloud service, a cloud database, cloud computing, a cloud function, cloud storage, a network service, cloud communication, a middleware service, a domain name service, a network security service such as cloud security and host security, a content delivery network (CDN), and a big data and artificial intelligence platform. The terminal 102 and the server 104 may be directly or indirectly connected through wired or wireless communication, which is not limited in this application.

In some embodiments, as shown in FIG. 2, a shadow rendering method is provided. The method may be performed by a terminal or a server, or may be jointly performed by the terminal and the server. A description is provided by using an example in which the method is applied to the terminal 102 in FIG. 1. The method includes the following operations.

Operation 202: Set a two-dimensional grid on a preset plane in a world space where a virtual scene is located.

The virtual scene is a virtual scene displayed (or provided) when an application runs on a terminal. The virtual scene may be a simulated environment scene for the real world, or may be a semi-simulated and semi-fictitious three-dimensional environment scene, or may be a purely fictitious three-dimensional environment scene. The virtual scene may be any one of a two-dimensional virtual scene, a 2.5-dimensional virtual scene, and a three-dimensional virtual scene. The 2.5-dimensional virtual scene includes a width dimension, a length dimension, and a depth dimension. In addition, the depth dimension expresses only partial depth information in the virtual scene, and cannot completely express a space shape in the 2.5-dimensional virtual scene. The three-dimensional virtual scene includes a width dimension, a length dimension, and a depth dimension. In addition, the depth dimension can express complete depth information in the virtual scene, and can completely express a space shape in the three-dimensional virtual scene.

The world space refers to a three-dimensional space in which the virtual scene is located. A size of the world space may be customized. For example, the world space may be a stereoscopic space with a length of 100 meters, a width of 100 meters, and a height of 100 meters. A world space position refers to a position in the world space.

The preset plane may be set as required. For example, the virtual scene includes a ground. The ground may also be referred to as a horizontal plane. The preset plane may be a plane parallel to the horizontal plane, or the horizontal plane may be used as the preset plane. The preset plane may also be a plane at a predetermined angle to the horizontal plane. The predetermined angle may be set as required, for example, may be in a range of 0 degrees to 90 degrees. A magnitude of the predetermined angle is not limited herein.

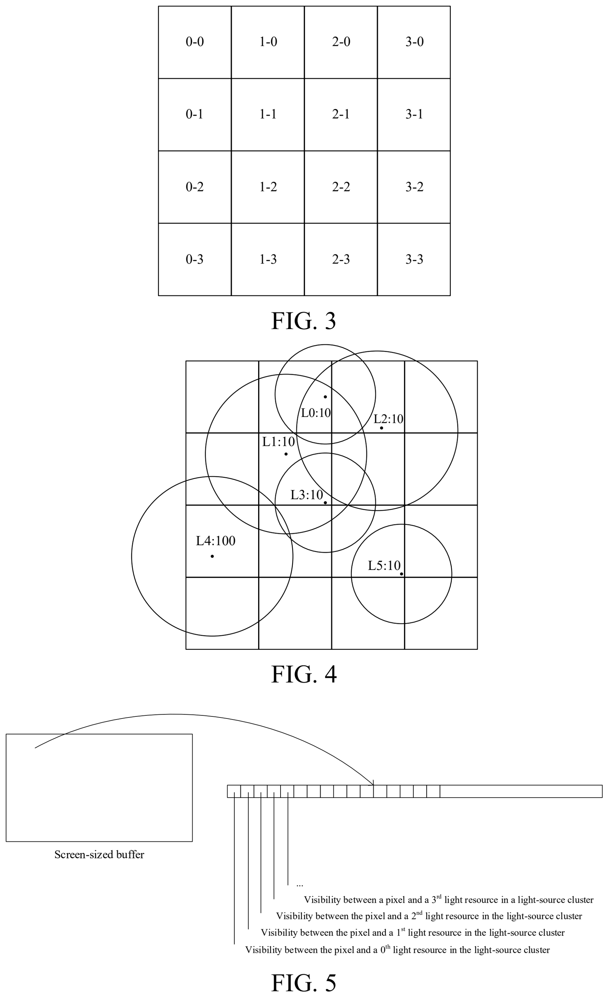

A two-dimensional grid has a specific size and shape. The size and the shape of the two-dimensional grid may be preset as required. For example, the shape of the two-dimensional grid is a rectangle, and a length and a width of the two-dimensional grid may be set as required. The two-dimensional grid includes a plurality of cells. A shape of each of the cells includes but is not limited to at least one of the rectangle or a triangle. The size of each cell in the two-dimensional grid may be the same or different. FIG. 3 is a schematic diagram showing a two-dimensional grid. The two-dimensional grid in FIG. 3 has 16 cells in total. A position of the cell may be represented through a row and a column. A number in each cell represents the position of the cell. For example, "0-0" represents a cell in row 0 and column 0, and "1-1" represents a cell in row 1 and column 1.

Specifically, a terminal may set a two-dimensional grid on a preset plane in a world space in which a virtual scene is located. A position of the two-dimensional grid on a preset plane may be updated in real time. For example, during real-time rendering, the position of the two-dimensional grid on the preset plane may be updated in real time based on real-time switching of pictures, so that light resources in a light-source cluster obtained through two-dimensional grid-based clustering may cover light resources participating in real-time rendering. The light-source cluster is a set of light resources.

Operation 204: Cluster a plurality of light resources in the virtual scene through cells in the two-dimensional grid, to obtain a light-source cluster corresponding to the cells, a projection area of an illuminated space irradiated by the light resource in the light-source cluster on the preset plane intersecting with the cell corresponding to the light-source cluster.

The light resource refers to an object that can emit light by itself and is emitting light, for example, the sun, an electric light, or a burning substance. The light resource in the virtual scene is a series of illumination data that can truly simulate an illumination effect of a light resource in reality. The illuminated space irradiated by the light resource refers to an area that can be irradiated by the light resource. The illuminated space irradiated by the light resource may be either spherical or conical. In a case that the illuminated space irradiated by the light resource is spherical, the illuminated space irradiated by the light resource may be referred to as a spherical range of the light resource.

The plurality of light resources in the virtual scene may be all or part of light resources in the virtual scene, for example, may be light resources in which the projection area in the virtual scene intersects with the two-dimensional grid. The projection area of the light resource refers to a projection area of the illuminated space irradiated by the light resource on the preset plane.

That the cell intersects with the projection area means that the cell and the projection area have an intersection relationship. In other words, an intersection set exists between the cell and the projection area. That the cell intersects with the projection area may specifically include the following cases: an intersection set of a cell and a projection area is a common part of the cell and the projection area, or when a cell is within a projection area, an intersection set of the cell and the projection area is the cell, or when a projection area is within a cell, an intersection set of the cell and the projection area is the projection area. In other words, in some embodiments, if a cell is within a projection area, or a projection area is within a cell, the cell also intersects with the projection area.

The plurality of light resources in the virtual scene may be stored in a buffer of a graphics processing unit (GPU), and the two-dimensional grid may also be stored in the GPU. The light-source cluster is a set of light resources. The light-source cluster is a light-source cluster obtained by clustering the plurality of light resources in the virtual scene.

When the plurality of light resources in the virtual scene are clustered through the cells in the two-dimensional grid, each cell may be processed separately. To be specific, for each cell, whether the projection area of the illuminated space irradiated by the light resource in the light-source cluster on the preset plane intersects with the grid is determined. If the projection area intersects with the cell, an intersecting light resource is added to a light-source cluster corresponding to the cell.

Specifically, the terminal may determine the projection area of the illuminated space irradiated by the plurality of light resources on the preset plane, and obtain, for each cell in the two-dimensional grid, the light-source cluster corresponding to the cell based on light resources that intersect with the cell in the projection area. For example, the terminal may select all or part of light resources from light resources that intersects with the cell in the projection area, to combine the light-source cluster corresponding to the cell. FIG. 4 is a schematic diagram showing that a projection area of a light resource intersects with a cell in a two-dimensional grid. Each circle in FIG. 4 represents a projection area of one light resource, a solid point in the circle represents a center point of the circle, and the center point of the circle is a projection position of a world space position of the light resource on a preset plane. L0-L5 represent 5 light resources, and a number followed by L may be referred to as an index of the light resources. A number following the colon represents brightness. For example, 100 in L4: 100 represents brightness.

In some embodiments, for each grid, a cell column of the cell is generated. The cell column of the cell is a column that uses the cell as a cross section, is perpendicular to the preset plane, and has a height greater than a preset height. A terminal may obtain a light-source cluster corresponding to the cell based on light resources having an illuminated space intersecting with the cell column. The cell column may also be referred to as a light-source cluster column. The terminal may select all or some light resources from the light resources that intersects with the cell column in the illuminated space, to combine the light-source cluster corresponding to the cell.

Operation 206: Determine, for each pixel point in a screen space, a target light-source cluster from a plurality of light-source clusters, illumination of the target light-source cluster being related to a pixel value of the pixel point.

The screen space refers to a two-dimensional space of a screen. A size of the screen space is a size of a screen and is expressed in pixels. The light-source cluster whose illumination is related to the pixel value of the pixel point may be referred to as a target light-source cluster of the pixel point. The target light-source cluster of the pixel point may include a target light resource corresponding to the pixel point. The target light resource corresponding to the pixel point is a light resource whose illuminated space includes a world space position of the pixel point. Each cell has a corresponding light-source cluster. The two-dimensional grid divides plurality of cells, and the plurality of cells correspond to plurality of light-source clusters. The target light-source cluster whose illumination is related to the pixel value of the pixel point means that the illumination of the light resources of the target light-source cluster has an impact on the pixel value of the pixel point. In some specific embodiments, whether the light resources in the target light-source cluster are illuminated or an intensity magnitude of the illumination may cause a change of the pixel value of the pixel point.

Specifically, the terminal may determine the world space position of the pixel point; determine a cell to which a projection position of the world space position of the pixel point on the preset plane belongs, to obtain a target cell; and determine a light-source cluster corresponding to the target cell as a target light-source cluster whose illumination is related to the pixel value of the pixel point.

Operation 208: Render a shadow of the virtual scene based on the target light-source cluster of each pixel point, to obtain a shadow rendering result.

When a ray irradiated by the light resource in the virtual scene is blocked, the shadow is formed. Rendering the shadow, namely, shadow rendering, is processing of visually presenting the shadow. When the shadow in the virtual scene is rendered based on the target light-source cluster of each pixel point, for each pixel point, a position of the shadow in the virtual scene may be determined based on a scene layout in the virtual scene and a position of the light resource in the target light-source cluster of the pixel point, to further determine impact of the illumination of the light resource in the target light-source cluster on the pixel value of the pixel point, namely, a contribution amount to the pixel value of the pixel point. Therefore, the pixel value of the pixel point at a position of the shadow is calculated by combining the illumination of the light resource in the target light-source cluster, and a shadow rendering result may be obtained by rendering the pixel value of the pixel point.

Specifically, for each pixel point, the terminal may determine cluster reachability information of the pixel point. The cluster reachability information of the pixel point includes light resource reachability information of the light resources in the target light-source cluster of the pixel point for the pixel point. The light resource reachability information of the light resource for the pixel point represents whether the light resource illuminates the world space position of the pixel point. The light resource reachability information is one of a first preset value or a second preset value. The first preset value represents that the light resources does not illuminate the world space position of the pixel point. The second preset value represents that the light resource illuminates the world space position of the pixel point. The first preset value is different from the second preset value. The first preset value and the second preset value may be represented through different values. For example, the first preset value is 1, and the second preset value is 0. Certainly, the first preset value and the second preset value may alternatively be other values. This is not specifically limited herein.

In some embodiments, for any light resource in the target light-source cluster of the pixel point, in a case that the illuminated space irradiated by the light resource includes the world space position of the pixel point, namely, in a case that the light resource is the target light resource corresponding to the pixel point, the terminal may perform ray tracing based on the world space position of the target light resource and the world space position of the pixel point, to obtain the light resource reachability information of the target light resource for the pixel point. The ray tracing may be implemented based on screen space ray tracing and a screen space shadow algorithm. The screen space ray tracing is a common real-time computer graphics algorithm that determines, by accessing a scene depth buffer through a pixel coloring program or a calculation coloring program, whether two points in the space are blocked by a certain pixel in the screen space in the corresponding world space. The screen space shadow algorithm is a real-time computer graphics algorithm in which screen space ray tracing is performed between a pixel to be drawn currently and a light resource, to calculate whether the pixel generates a shadow in the presence of the light resource.

In some embodiments, for any light resource in the target light-source cluster of the pixel point, the terminal may calculate a distance between the light resource and an observation position, and determine the light resource reachability information of the light resource for the pixel point in a case that the distance between the light resource and the observation position is greater than a distance threshold. The distance threshold may be set as required, and the observation position is a position of a virtual camera currently observing the virtual scene.

In some embodiments, the terminal may determine a start position of ray tracing and an end position of ray tracing based on the world space position of the target light resource and the world space position of the pixel point. Specifically, the terminal may determine the world space position of the pixel point as the start position of ray tracing, determine a direction from the world space position of the pixel point to the world space position of the target light resource, to obtain a ray tracing direction, and determine the end position of ray tracing based on the ray tracing direction and a preset tracing distance. The preset tracing distance may be set as required, for example, may be determined based on a length of the shadow. The preset tracing distance is greater than or equal to the length of the shadow. The ray tracing direction refers to a direction pointing from the world space position of the pixel point to the world space position of the target light resource, and the ray tracing direction may be represented through a direction vector. The direction vector points from the world space position of the pixel point to the world space position of the target light resource, and is a unit vector.

In some embodiments, the terminal may calculate a product of the preset tracing distance and the direction vector, add a result of the product and the world space position of the pixel point, and use a result of the addition as the end position. For example, assuming that the preset tracing distance is L, the direction vector is (x1, y1, z1), and the world space position of the pixel point is (x2, y2, z2), the end position is equal to (x2, y2, z2) + L*(x1, y1, z1).

In some embodiments, the terminal may determine a ray tracing step count based on the start position of ray tracing and the end position of ray tracing. Specifically, the terminal may convert the start position of ray tracing into a target two-dimensional space, to obtain a converted start position, and convert the end position of ray tracing into the target two-dimensional space, to obtain a converted end position. The target two-dimensional space is either a texture space (i.e., a UV space) or the screen space. The texture space is a unit square area, where (u, v) represents texture coordinates, 0<=u<=1, and 0<=v<=1. In a case that the target two-dimensional space is the texture space, the terminal may determine a corresponding position after the start position of ray tracing is converted into the texture space, use the determined position as a converted start position, determine a corresponding position after the end position of ray tracing is converted into the texture space, and use the determined position as a converted end position. Similarly, in a case that the target two-dimensional space is the screen space, the terminal may determine a corresponding position after the start position of ray tracing is converted into the screen space, use the determined position as a converted start position, determine a corresponding position after the end position of ray tracing is converted into the screen space, and use the determined position as a converted end position.

In some embodiments, the terminal may determine a tracing step count factor based on a distance between the converted start position and the converted end position, and determine the ray tracing step count based on the tracing step count factor and a tracing step count threshold. The tracing step count factor reflects a screen area occupied by a line segment between the start position of ray tracing and the end position of ray tracing in the screen space. Therefore, a greater tracing step count factor indicates a larger screen area occupied on the screen space. The tracing step count threshold may be preset as required. Specifically, the distance between the converted start position and the converted end position is positively correlated with the tracing step count factor. The ray tracing step count is positively correlated with the tracing step count factor and the tracing step count threshold. For example, the terminal may calculate the distance between the converted start position and the converted end position, and determine the calculated distance as the tracing step count factor. The terminal may calculate a product of the tracing step count factor and a maximum tracing step count, and use a result of the product as a candidate tracing step count. In a case that the candidate tracing step count is less than a minimum tracing step count, the minimum tracing step count is used as the ray tracing step count. In a case that the candidate tracing step count is greater than the maximum tracing step count, the maximum tracing step count is used as the ray tracing step count. In a case that the candidate tracing step count is greater than or equal to the minimum tracing step count, and the candidate tracing step count is less than or equal to the minimum tracing step count, the candidate tracing step count is used as the ray tracing step count. Since the tracing step count factor reflects the screen area occupied by the line segment between the start position of ray tracing and the end position of ray tracing in the screen space, a larger occupied screen area indicates a smaller distance between a camera and the pixel point and the light resource, and on the contrary, a smaller occupied screen area indicates a larger distance between the camera and the pixel point and the light resource. Therefore, the ray tracing step count is positively correlated with the tracing step count factor, so that a smaller distance between the camera and the pixel point and the light resource indicates more ray tracing step counts, and on the contrary, a larger distance between the camera and the pixel point and the light resource indicates fewer ray tracing step counts, thereby causing the ray tracing to be more reasonable and improving efficiency of ray tracing.

In some embodiments, the terminal may perform ray tracing based on the ray tracing step count, to obtain the light resource reachability information of the target light resource for the pixel point. Specifically, the terminal may determine the ray tracing step size based on the preset tracing distance and the ray tracing step count. For example, the terminal may calculate a ratio of the preset tracing distance to the ray tracing step count, and determine the calculated ratio as the ray tracing step size. The terminal may determine a plurality of sampling positions along the ray tracing direction from the world space position of the pixel point. A length by which two adjacent sampling positions are spaced apart in the ray tracing direction is a ray tracing step size, and a quantity of the sampling positions is the ray tracing step count. The plurality of sampling positions refer to a quantity, that is the ray tracing step count, of sampling positions. For example, if the ray tracing step count is 6, the plurality of sampling positions refer to 6 sampling positions. For each sampling position, the terminal may determine a difference between a depth value of the sampling position and a depth value of a screen space position corresponding to the sampling position, to obtain a depth difference of the sampling position. The screen space position is a position of the pixel point in the screen space, and the depth value of the screen space position is a depth value of the pixel point. The terminal may store the depth value of each pixel point in the screen space. The terminal may determine the depth value of the sampling position to obtain a first depth value, calculate a pixel point corresponding to the sampling position in the screen space, obtain a depth value of the corresponding pixel point, to obtain a second depth value, and calculate a difference between the first depth value and the second depth value to obtain the depth difference of the sampling position. The terminal may obtain the light resource reachability information of the target light resource for the pixel point based on the depth difference of each sampling position. The depth value is configured for reflecting a distance between the world space position and the observation position. The depth value of the pixel point is configured for reflecting a distance between a position of the pixel point in the world space and the observation position. A larger depth value indicates a larger distance to the observation position.

In some embodiments, the terminal may determine a depth difference threshold based on a depth value of the start position of ray tracing and a depth value of the end position of the ray tracing. Specifically, the terminal may determine the depth value of the start position of ray tracing to obtain a starting depth value, determine the depth value of the end position of the ray tracing to obtain an ending depth value, determine the difference between the starting depth value and the ending depth value to obtain a total depth difference, and determine the depth difference threshold based on the total depth difference and the ray tracing step count. For example, the terminal may calculate a ratio of the total depth difference to the ray tracing step count, and determine the calculated ratio as the depth difference threshold. The depth difference threshold may also be referred to as a step depth.

In some embodiments, in a case that the depth difference of any sampling position is less than or equal to the depth difference threshold, it is determined that the light resource reachability information of the target light resource for the pixel point is the first preset value. In a case that the depth difference of each sampling position is greater than the depth difference threshold, it is determined that the light resource reachability information of the target light resource for the pixel point is the second preset value.

In some embodiments, for any light resource in the target light-source cluster of the pixel point, in a case that the illuminated space irradiated by the light resource does not include the world space position of the pixel point, the terminal uses the first preset value as the light resource reachability information of the light resource for the pixel point.

In some embodiments, before the shadow rendering, the terminal may combine light resource reachability information of the light resources in the target light-source cluster of the pixel point for the pixel point into cluster reachability information of the pixel point. During the shadow rendering, the light resource reachability information of the light resource participating in shadow rendering for the pixel point is obtained from the cluster reachability information of the pixel point, and the shadow of the virtual scene is rendered based on the light resource reachability information of the light resource participating in shadow rendering for the pixel point, to obtain the shadow rendering result. There may be one or more light resources participating in shadow rendering. The light resources participating in shadow rendering are light resources that actually need to be drawn in a GPU delay pipeline.

In some embodiments, for each pixel point in the screen space, the terminal may generate a corresponding bit string for the pixel point. The bit string is a character string that includes only at least one of 0 or 1. The bit string may also be referred to as a bit sequence, which is a sequence of 0s or 1s arranged in order. A length of the bit string is a fixed value, and the fixed value is greater than or equal to a maximum length of a light resource list for storing the light-source cluster. An actual form of the bit string may be a 32-bit integer, or the like. The terminal may store cluster reachability information of the pixel point in a form of the bit string. For example, different bits in the bit string represent different light resource reachability information in the cluster reachability information.

Before the light resource reachability information is determined, the terminal may generate the bit string of the pixel point and initialize a character of each bit in the bit string to the second preset value, for example, initialize to 0. In a case that the light resource reachability information of the light resource for the pixel point is the first preset value is determined, the terminal updates the bit corresponding to the light resource in the bit string to the first preset value, for example, updates to 1. In a case that the light resource reachability information of the light resource for the pixel point is the second preset value is determined, the terminal maintains the bit string unchanged.

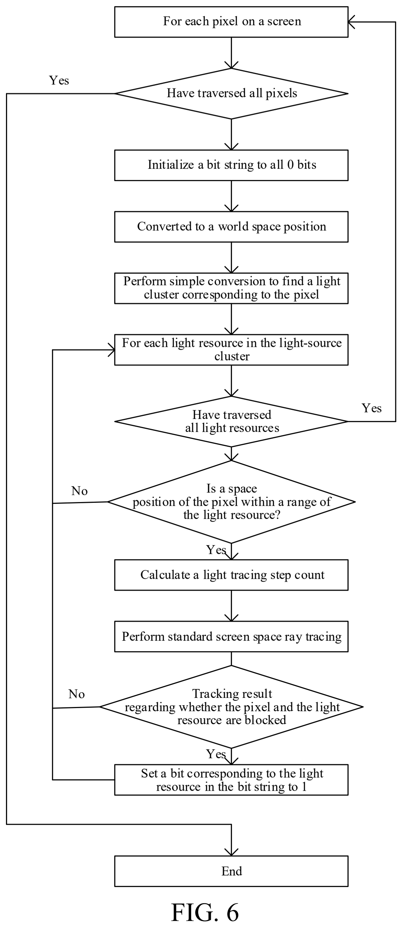

The terminal may create a buffer in the GPU. The buffer may be referred to as a screen pixel shadow mask buffer, and store the bit string of each pixel point into the buffer. During the shadow rendering, the terminal may read, from the buffer, the light resource reachability information of the light resource for the pixel point. FIG. 5 is a schematic diagram of a screen pixel shadow mask buffer. A size of the screen pixel shadow mask buffer may match a size of a screen. For example, if the size of the screen is 1920×1080, a quantity of memory blocks of the screen pixel shadow mask buffer may be 1920×1080. Each memory block has a bit string of one pixel point stored therein. FIG. 5 shows a bit string stored in one memory block in the screen pixel shadow mask buffer. FIG. 6 is a flowchart of storing light resource reachability information through a bit string.

In the foregoing shadow rendering method, a two-dimensional grid is set on a preset plane in a world space in which a virtual scene is located. A plurality of light resources in the virtual scene is clustered through each cell in a two-dimensional grid, to obtain a light-source cluster corresponding to each cell, a projection area of an illuminated space irradiated by the light resource in the light-source cluster on the preset plane intersecting with a corresponding cell. For each pixel point in a screen space, a target light-source cluster is determined from the plurality of light-source clusters, illumination of the target light-source cluster being related to a pixel value of the pixel point. A shadow of the virtual scene is rendered based on the target light-source cluster of each pixel point, to obtain a shadow rendering result. Because the light resources are clustered, and the shadow of the virtual scene is rendered based on the target light-source cluster of the pixel point, for a case in which a large quantity of light resources exist in the virtual scene, shadow rendering may be quickly implemented, thereby improving shadow rendering efficiency.

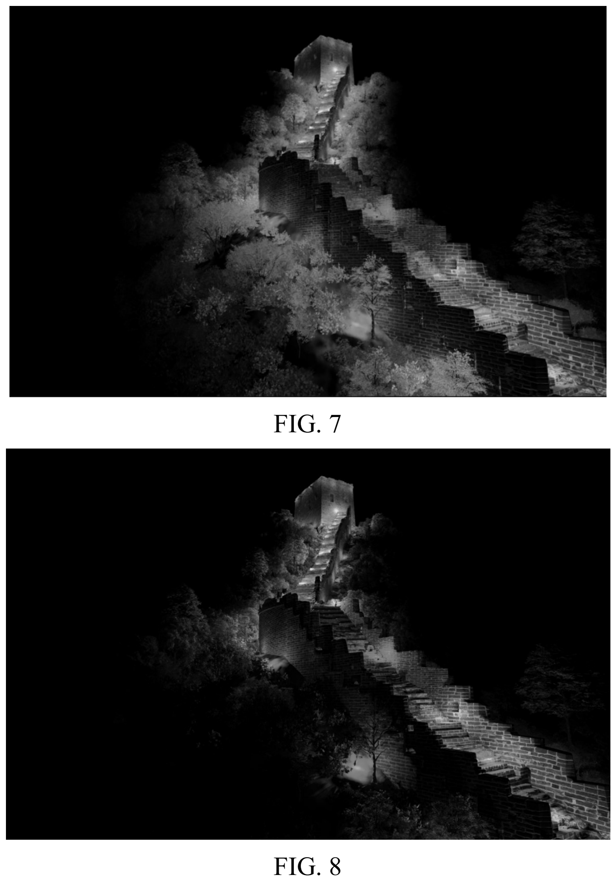

The shadow rendering method provided in this application may be applied to real-time rendering, to add a stronger layering feeling and reality feeling to a rendered picture through a shadow. FIG. 7 is a real-time rendering picture obtained by not rendering a shadow. FIG. 8 is a real-time rendering picture obtained by rendering a shadow. Apparently, compared with FIG. 7, the real-time rendering picture in FIG. 8 has a stronger layering feeling and reality feeling. During real-time rendering in the presence of a large quantity of light resources, shadow real-time rendering in the presence of a large quantity of light resources is required to achieve realistic real-time rendering in the presence of a large quantity of light resources. According to the shadow rendering method provided in this application, rendering performance of the large quantity of light resources may be irrelevant to a scene scale and a quantity of light resources, thereby improving rendering efficiency of the large quantity of light resources in a scene of the large quantity of light resources, and enabling rendering of the shadow with the large quantity of light resources to achieve real-time performance.

In some embodiments, the clustering a plurality of light resources in the virtual scene through cells in the two-dimensional grid, to obtain a light-source cluster corresponding to the cells includes: obtaining, for each cell in the two-dimensional grid, the light-source cluster of the cell based on the light resource intersecting with the cell in the plurality of light resources, intersecting with the cell meaning that the projection area of the illuminated space on the preset plane intersects with the cell, and a quantity of light resources in the light-source cluster being less than or equal to a preset quantity.

The preset quantity may be set as required, for example, may be 20, 50, or the like. In a case that the projection area of the illuminated space irradiated by the light resource on the preset plane intersects with the cell, it is considered that the light resource intersects with the cell.

Specifically, for each cell, the terminal may determine an intersecting light resource of the cell from the plurality of light resources. The intersecting light resource of the cell refers to a light resource where the projection area of the illuminated space on the preset plane intersects with the cell. One cell may have one or a plurality of intersecting light resources, "the plurality of" meaning at least two. In a case that the quantity of intersecting light resources of the cell is less than or equal to the preset quantity, the terminal may combine each intersecting light resource of the cell into a light-source cluster corresponding to the cell.

In this embodiment, because the quantity of light resources in the light-source cluster is less than or equal to the preset quantity, impact of the quantity of light resources on the rendering performance is reduced. In a case that the large quantity of light resources exist in the virtual scene, the rendering performance and efficiency may be improved.

In some embodiments, the obtaining the light-source cluster of the cell based on the light resource intersecting with the cell in the plurality of light resources includes: determining an intersecting light resource of the cell from the plurality of light resources in sequence, the intersecting light resource of the cell referring to a light resource where the projection area of the illuminated space on the preset plane intersects with the cell; adding, in a case that a quantity of light resources included in a current light-source cluster of the cell is less than the preset quantity, the intersecting light resource to the current light-source cluster of the cell; performing the operation of determining the intersecting light resource of the cell from the plurality of light resources in sequence, until the plurality of light resources are traversed; and determining the current light-source cluster of the cell as the light-source cluster of the cell in a case that the plurality of light resources are traversed. The terminal may initialize the light-source cluster of each cell, and the initialized light-source cluster has no light resources and can accommodate the preset quantity of light resources at most. For example, an empty list with a fixed length may be initialized as the initialized light-source cluster. The empty list with a fixed length may record the preset quantity of light resources at most. Recording the light resource in the light-source cluster means recording an identifier of the light resource. The current light-source cluster is initially the initialized light-source cluster. During traversal of the plurality of light resources, a light resource may be added to the current light-source cluster.

Specifically, for each cell in the two-dimensional grid, the light-source cluster may be determined through the method of this embodiment. In a case that the quantity of light resources included in the current light-source cluster of the cell is less than the preset quantity, the terminal may add the intersecting light resource to the current light-source cluster of the cell. In a case that the quantity of light resources included in the current light-source cluster of the cell is greater than or equal to the preset quantity, the terminal may determine a to-be-replaced light resource from the current light-source cluster of the cell; replace the to-be-replaced light resource in the current light-source cluster of the cell with the intersecting light resource; perform the operation of determining the intersecting light resource of the cell from the plurality of light resources in sequence, until the plurality of light resources are traversed; and determine the current light-source cluster of the cell as the light-source cluster of the cell in a case that the plurality of light resources are traversed.

In this embodiment, the plurality of light resources are traversed to quickly determine the light-source cluster, thereby improving clustering efficiency.

In some embodiments, the shadow rendering method further includes: determining an impact degree representation value of the intersecting light resource of the cell for the cell in a case that the quantity of light resources included in the current light-source cluster of the cell reaches the preset quantity; searching the current light-source cluster of the cell for a first to-be-replaced light resource, an impact degree representation value of the first to-be-replaced light resource for the cell being less than an impact degree representation value of the intersecting light resource for the cell; and removing the found first to-be-replaced light resource from the current light-source cluster of the cell, and adding the intersecting light resource to the current light-source cluster of the cell.

The impact degree representation value is configured for representing an illumination impact degree of the light resource on a cell column of the cell. A larger impact degree representation value represents a higher degree of correlation between illumination and the pixel value of the pixel point.

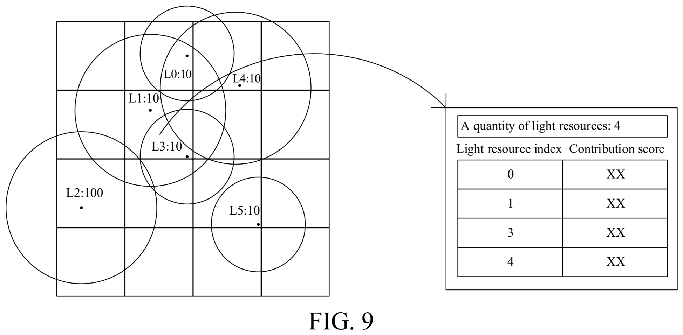

Specifically, the terminal may determine a minimum impact degree representation value from the impact degree representation values corresponding to the current light-source cluster of the cell. The impact degree representation value refers to an impact degree representation value of the light resources in the current light-source cluster of the cell for the cell. The terminal may compare the impact degree representation value of the intersecting light resource for the cell with the minimum impact degree representation value, and determine a light resource corresponding to the minimum impact degree representation value as the found first to-be-replaced light resource in a case that the impact degree representation value of the intersecting light resource for the cell is greater than the minimum impact degree representation value. As shown in FIG. 9, a cell in row 2 and column 2 is used as an example. Light resources L0, L1, L2, L3, and L4 all intersect with the cell. A table in FIG. 9 shows indexes of light resources included in a current light-source cluster of the cell, a quantity of light resources, and a contribution score corresponding to a light resource. The contribution score refers to an impact degree representation value.

In some embodiments, the terminal may remove the found first to-be-replaced light resource from the current light-source cluster of the cell, add the intersecting light resources to the current light-source cluster of the cell, and perform the operation of determining the intersecting light resource of the cell from the plurality of light resources in sequence.

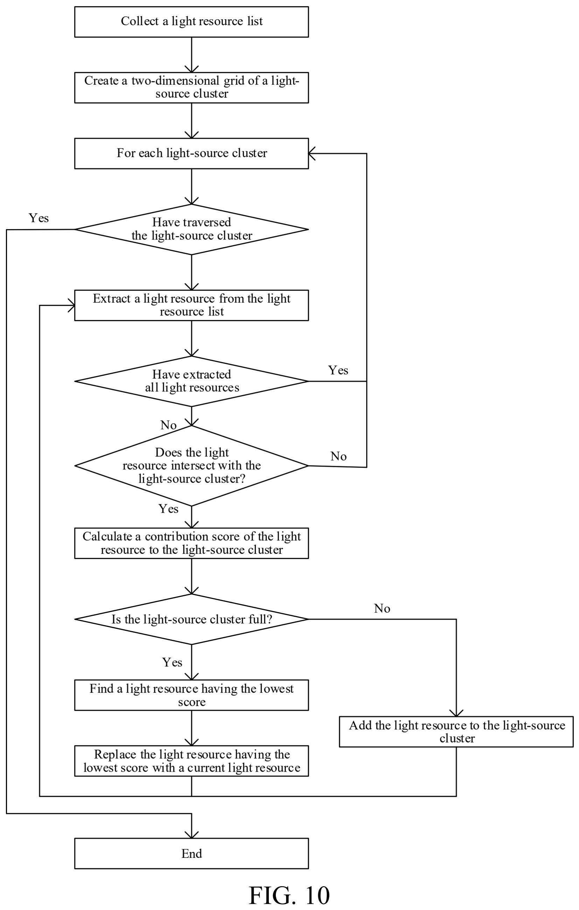

In some embodiments, in a case that the impact degree representation value of the intersecting light resource for the cell is less than or equal to the minimum impact degree representation value, the terminal determines that the first to-be-replaced light resource is not found, and returns to the operation of determining an intersecting light resource of the cell from the plurality of light resources in sequence. FIG. 10 is a flowchart of clustering a plurality of light resources to obtain a light-source cluster. In FIG. 10, collecting a light resource list refers to determining a plurality of light resources in a virtual scene, namely, determining a plurality of light resources to be clustered, and a contribution score refers to an impact degree representation value.

In this embodiment, because the impact degree representation value of the first to-be-replaced light resource for the cell is less than the impact degree representation value of the intersecting light resource for the cell, the found first to-be-replaced light resource is removed from the current light-source cluster of the cell, and the intersecting light resource is added to the current light-source cluster of the cell, so that the light resources in the current light-source cluster may be updated toward an increasing impact degree representation value. Therefore, a light resource having a large impact degree representation value is reserved in the light-source cluster of the cell, which facilitates accurate rendering, thereby improving a rendering effect.

In some embodiments, the determining an impact degree representation value of the intersecting light resource of the cell for the cell includes: determining a distance quantization value of the intersecting light resource of the cell, the distance quantization value being configured for representing a distance between the intersecting light resource of the cell and the cell; and determining the impact degree representation value of the intersecting light resource of the cell for the cell based on the distance quantization value, the impact degree representation value being negatively correlated with the distance quantization value. The impact degree representation value is negatively correlated with the distance quantization value, which means that a larger impact degree representation value indicates a smaller distance quantization value. A smaller impact degree representation value indicates a larger distance quantization value.

The distance between the light resource and the cell may be a distance between a world space position of the light resource and a center position of the cell, or may be a distance between a projection position of the light resource and a center position of the cell. The projection position of the light resource refers to a position of projection of the world space position of the light resource on the preset plane. The impact degree representation value is negatively correlated with the distance quantization value.

In this embodiment, because the distance quantization value represents the distance between the intersecting light resource of the grid and the cell, and the distance between the light resource and the cell may reflect the illumination impact degree of the light resource on the cell column of the cell, the impact degree representation value is determined based on the distance quantization value, thereby improving accuracy of the impact degree representation value.

In some embodiments, the determining the impact degree representation value of the intersecting light resource of the cell for the cell based on the distance quantization value includes: determining an attribute quantization value of the intersecting light resource of the cell, the attribute quantization value being determined based on an attribute of the intersecting light resource of the cell; and determining the impact degree representation value of the intersecting light resource of the cell for the cell based on the distance quantization value and the attribute quantization value.

The attribute of the light resource includes, but is not limited to, at least one of brightness or illumination intensity of the light resource. The brightness is calculated through a color of the light resource. The attribute quantization value is positively correlated with the brightness and the illumination intensity of the light resource. The attribute quantization value may further be related to an attenuation speed of the light resource. A faster attenuation speed of the light resource indicates a smaller attribute quantization value, and a slower attenuation speed of the light resource indicates a larger attribute quantization value. The impact degree representation value is positively correlated with the attribute quantization value.

Specifically, the terminal may calculate a ratio of the attribute quantization value to the distance quantization value, and determine the ratio as the impact degree representation value of the intersecting light resources for the cell.

In this embodiment, the impact degree representation value is determined based on the attribute quantization value and the distance quantization value, thereby improving accuracy of the impact degree representation value.

In some embodiments, the quantity of light resources included in the light-source cluster is less than or equal to the preset quantity. The clustering a plurality of light resources in the virtual scene through cells in the two-dimensional grid, to obtain a light-source cluster corresponding to the cells includes: determining a candidate light resource from the plurality of light resources in sequence, and determining, from the cells of the two-dimensional grid, a cell that intersects with the candidate light resource on the preset plane; adding the candidate light resource to a current light-source cluster of the determined cell in a case that a quantity of light resources included in the current light-source cluster of the determined cell is less than the preset quantity; performing the operation of determining the candidate light resource from the plurality of light resources in sequence, until the plurality of light resources are traversed; and determining the current light-source cluster of each cell in the two-dimensional grid as the light-source cluster of each cell after the plurality of light resources are traversed.

The candidate light resource is any light resource in the plurality of light resources. In a process of traversing the plurality of light resources, different light resources may be used as candidate light resources each time. The cell intersected with the candidate light resources on the preset plane is a cell intersected with the projection area of the illuminated space irradiated by the candidate light resources on the preset plane. In a process of traversing the plurality of light resources, the current light-source cluster of the cell may be constantly changing. Before the plurality of light resources start to be traversed, the current light-source cluster of the cell may not include any light resource, to be specific, the current light-source cluster is initialized as a light-source cluster that does not include any light resource. In a process of traversing the plurality of light resources, the light resource is added to the current light-source cluster.

Specifically, in a case that the quantity of light resources included in the current light-source cluster of the determined cell is less than the preset quantity, the terminal may add the candidate light resource to the current light-source cluster of the determined cell. In a case that the quantity of light resources included in the current light-source cluster of the determined cell reaches the preset quantity, traversing of the plurality of light resources may be stopped. Alternatively, the terminal may determine a to-be-replaced light resource from the current light-source cluster, replace the to-be-replaced light resource in the current light-source cluster with the candidate light resource, and perform the operation of determining the candidate light resource from the plurality of light resources in sequence, until the plurality of light resources are traversed.

In some embodiments, a clustering manner includes at least one of a first clustering manner or a second clustering manner. The first clustering manner is different from the second clustering manner. The first clustering manner and the second clustering manner are respectively applicable to a case in which there are few light resources or a parallel computing capability of a GPU is strong, and a case in which there are an excessively large quantity of light resources or a parallel computing capability of a GPU is slightly weak. The terminal may determine a selected clustering manner before clustering. The selected clustering manner may be automatically selected by the terminal based on the quantity of light resources or the parallel computing capability of the GPU, or may be manually selected.

In a case that the selected clustering manner is the first clustering manner, for each cell in the two-dimensional grid, the terminal may determine an intersecting light resource of the cell from the plurality of light resources in sequence, the intersecting light resource of the cell referring to a light resource where the projection area of the illuminated space on the preset plane intersects with the cell; add the intersecting light resource to a current light-source cluster of the cell in a case that a quantity of the light resources included in the current light-source cluster of the cell is less than the preset quantity; perform the operation of determining the intersecting light resource of the cell from the plurality of light resources in sequence, until the plurality of light resources are traversed; and determine the current light-source cluster of the cell as the light-source cluster of the cell in a case that the plurality of light resources are traversed.

In a case that the selected clustering manner is the second clustering manner, the terminal may determine a candidate light resource from the plurality of light resources in sequence, and determine, from the cells of the two-dimensional grid, a cell that intersects with the candidate light resource on the preset plane; add the candidate light resource to a current light-source cluster of the determined cell in a case that a quantity of light resources included in the current light-source cluster of the determined cell is less than the preset quantity; perform the operation of determining the candidate light resource from the plurality of light resources in sequence, until the plurality of light resources are traversed; and determine the current light-source cluster of each cell in the two-dimensional grid as the light-source cluster of each cell after the plurality of light resources are traversed.

In this embodiment, the light-source cluster of the cells is quickly determined by traversing the plurality of light resources in the virtual scene, thereby improving clustering efficiency.

In some embodiments, the shadow rendering method further includes: determining an impact degree representation value of the candidate light resource for the determined cell in a case that the quantity of light resources included in the current light-source cluster of the determined cell reaches the preset quantity; searching the current light-source cluster of the determined cell for a second to-be-replaced light resource, an impact degree representation value of the second to-be-replaced light resource for the determined cell being less than an impact degree representation value of the candidate light resource for the determined cell; and removing the found second to-be-replaced light resource from the current light-source cluster of the determined cell, and adding the candidate light resource to the current light-source cluster of the determined cell.

Specifically, the terminal may determine the minimum impact degree representation value from the impact degree representation values corresponding to the current light-source cluster of the determined cell. The impact degree representation values are impact degree representation values of the light resources in the current light-source cluster of the determined cell for the determined cell. The terminal may compare the impact degree representation value of the candidate light resource for the determined cell with the minimum impact degree representation value, and determine a light resource corresponding to the minimum impact degree representation value as the found second to-be-replaced light resource in a case that the impact degree representation value of the candidate light resource for the determined cell is greater than the minimum impact degree representation value.

In some embodiments, in a case that the impact degree representation value of the candidate light resource for the determined cell is less than or equal to the minimum impact degree representation value, the terminal determines that the second to-be-replaced light resource is not found.

In this embodiment, because the impact degree representation value of the second to-be-replaced light resource for the determined cell is less than the impact degree representation value of the candidate light resource for the determined cell, the found second to-be-replaced light resource is removed from the current light-source cluster of the determined cell, and the candidate light resource is added to the current light-source cluster of the determined cell, so that the light resources in the current light-source cluster may be updated toward an increasing impact degree representation value. Therefore, a light resource having a large impact degree representation value is reserved in the light-source cluster of the cell, which facilitates accurate rendering, thereby improving a rendering effect.

In some embodiments, the determining, for each pixel point in a screen space, a target light-source cluster from the plurality of light-source clusters includes: determining a world space position of the pixel point; determining a cell to which a projection position of the world space position of the pixel point on the preset plane belongs, to obtain a target cell; and determining a light-source cluster corresponding to the target cell as a target light-source cluster whose illumination is related to the pixel value of the pixel point.

An area occupied by the target cell on the preset plane includes a projection position of the world space position of the pixel point on the preset plane.

In this embodiment, the target light-source cluster whose illumination is related to the pixel value of the pixel point is accurately determined through the projection position, thereby avoiding subsequent rendering shadow distortion.

In some embodiments, the rendering a shadow of the virtual scene based on the target light-source cluster of each pixel point, to obtain a shadow rendering result includes: determining, for each pixel point in the screen space in a case that the target light-source cluster of the pixel point includes a light resource participating in shadow rendering, light resource reachability information of the light resource participating in shadow rendering for the pixel point, the light resource reachability information representing whether the light resource participating in shadow rendering illuminates the world space position of the pixel point; and rendering the shadow of the virtual scene based on the light resource reachability information of the light resource participating in shadow rendering for the pixel point, to obtain the shadow rendering result.

There may be one or more light resources participating in shadow rendering. Shadow rendering may be performed for each light resource participating in shadow rendering in a manner provided in this embodiment. The light resource participating in shadow rendering is a light resource that needs to be actually drawn in a delay pipeline of the GPU.

Specifically, the terminal may search the cluster reachability information of the pixel point for the light resource reachability information of the light resource participating in shadow rendering for the pixel point. The cluster reachability information of the pixel point includes light resource reachability information of the light resources in the target light-source cluster of the pixel point for the pixel point. The cluster reachability information of the pixel point is generated before the shadow rendering.

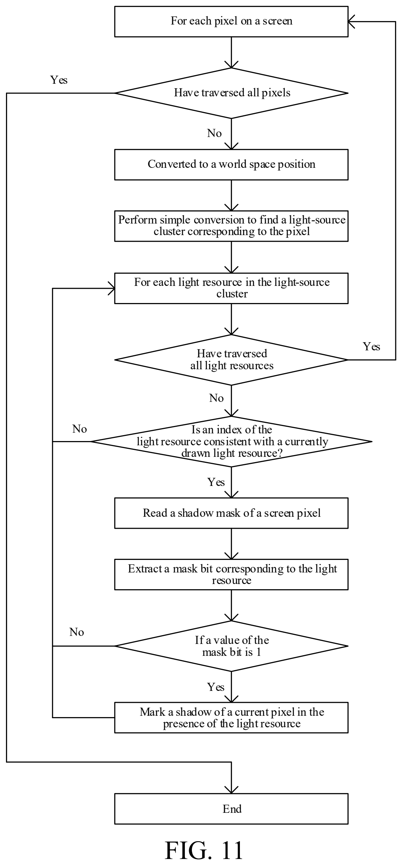

In some embodiments, in a case that the light resource reachability information of the light resources participating in the shadow rendering for the pixel point is the first preset value, it is determined that the pixel point has a shadow in the presence of the light resources participating in the shadow rendering. In a case that the light resource reachability information of the light resources participating in the shadow rendering for the pixel point is the second preset value, it is determined that the pixel point has no shadow in the presence of the light resources participating in the shadow rendering. The light resource reachability information of the pixel point may also be referred to as a shadow mask of the pixel point. FIG. 11 is a flowchart of performing shadow rendering by reading light resource reachability information in a shadow rendering process.

In this embodiment, shadow rendering may be quickly implemented based on the light resource reachability information, thereby improving efficiency of rendering a shadow.

In some embodiments, the determining light resource reachability information of the light resource participating in shadow rendering for the pixel point includes: determining cluster reachability information of the pixel point, the cluster reachability information of the pixel point including the light resource reachability information of the light resources in the target light-source cluster of the pixel point for the pixel point; and searching the cluster reachability information of the pixel point for the light resource reachability information of the light resource participating in shadow rendering for the pixel point.

Specifically, the cluster reachability information of the pixel point is determined before the shadow rendering. The cluster reachability information of the pixel point includes the light resource reachability information of the light resources in the target light-source cluster of the pixel point for the pixel point. During the shadow rendering, light resource reachability information of light resources participating in shadow rendering for the pixel point is obtained from the cluster reachability information of the pixel point, so as to perform shadow rendering.

In this embodiment, the light resource reachability information of the light resources participating in the shadow rendering for the pixel point is obtained from cluster reachability information of the pixel point, so that the light resource reachability information may be quickly obtained, thereby improving rendering efficiency.

In some embodiments, the determining cluster reachability information of the pixel point includes: determining the light resource reachability information of the light resources in the target light-source cluster of the pixel point for the pixel point; and combining light resource reachability information of the light resources in the target light-source cluster of the pixel point for the pixel point into cluster reachability information of the pixel point.

Specifically, before the shadow rendering, for each pixel point, the terminal may combine light resource reachability information of the light resources in the target light-source cluster of the pixel point for the pixel point into cluster reachability information of the pixel point.

In this embodiment, the light resource reachability information is generated before shadow rendering, to provide a condition for rendering, thereby improving rendering efficiency.

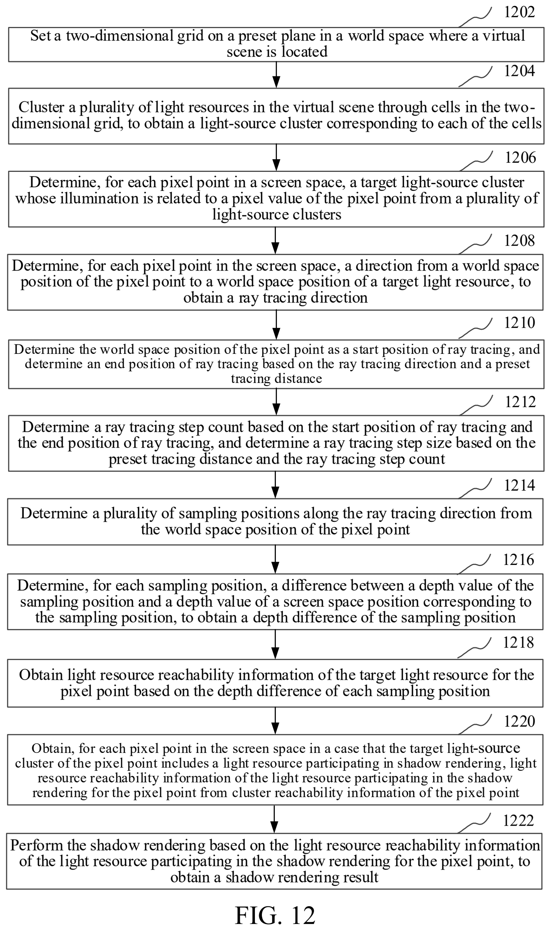

In some embodiments, as shown in FIG. 12, a shadow rendering method is provided. The method may be performed by a terminal, or may be perform jointly by a terminal and a server. A description is provided by using an example in which the method is applied to the terminal. The method includes the following operations.

Operation 1202: Set a two-dimensional grid on a preset plane in a world space where a virtual scene is located.

Operation 1204: Cluster a plurality of light resources in the virtual scene through cells in the two-dimensional grid, to obtain a light-source cluster corresponding to the cells.

A projection area of the illuminated space irradiated by the light resource in the light-source cluster on the preset plane intersects with the corresponding cell.

Operation 1206: Determine, for each pixel point in a screen space, a target light-source cluster from the plurality of light-source clusters, illumination of the target light-source cluster being related to a pixel value of the pixel point.

Operation 1208: Determine, for each pixel point in the screen space, a direction from a world space position of the pixel point to a world space position of a target light resource, to obtain a ray tracing direction.

The light resource reachability information represents whether the light resource illuminates the world space position of the pixel point.

Operation 1210: Determine the world space position of the pixel point as a start position of ray tracing, and determine an end position of ray tracing based on the ray tracing direction and a preset tracing distance.

Operation 1212: Determine a ray tracing step count based on the start position of ray tracing and the end position of ray tracing, and determine a ray tracing step size based on the preset tracing distance and the ray tracing step count.

The preset tracing distance is a distance between the start position of ray tracing and the end position of ray tracing.

Operation 1214: Determine a plurality of sampling positions along the ray tracing direction from the world space position of the pixel point.

A length by which two adjacent sampling positions are spaced apart in the ray tracing direction is a ray tracing step size, and a quantity of the sampling positions is the ray tracing step count.

Operation 1216: Determine, for each sampling position, a difference between a depth value of the sampling position and a depth value of a screen space position corresponding to the sampling position, to obtain a depth difference of the sampling position.

Operation 1218: Obtain light resource reachability information of the target light resource for the pixel point based on the depth difference of each sampling position.

Operation 1220: Obtain, for each pixel point in the screen space in a case that the target light-source cluster of the pixel point includes a light resource participating in shadow rendering, light resource reachability information of the light resource participating in the shadow rendering for the pixel point from cluster reachability information of the pixel point.

Operation 1222: Render the shadow of the virtual scene based on the light resource reachability information of the light resources participating in the shadow rendering for the pixel point, to obtain a shadow rendering result.

In this embodiment, the light resource reachability information is determined based on the ray tracing, and the light resources in the virtual scene are clustered. For a case where a large quantity of light resources exist in the virtual scene, shadow rendering may be quickly implemented, thereby improving shadow rendering efficiency.

The shadow rendering method provided in this application may be applied to any scene in which a shadow needs to be rendered, especially a scene in which a large quantity of light resources exist, including but not limited to, application in scenes such as film and television special effects, a game, sight glass simulation, visual design, virtual reality (VR), industrial simulation, and digital culture and creation. According to the shadow rendering method of this application, the shadow rendering efficiency may be improved in the scenes such as the film and television special effects, the visual design, the game, the sight glass simulation, the VR, the industrial simulation, and the digital culture and creation.

The shadow rendering method provided in this application is applied to the digital culture and creation, so as to implement simulation of an object having a cultural representative significance, especially an object irradiated by a large quantity of light resources. For example, simulation of the Great Wall may be implemented. A large quantity of lights are usually laid on the Great Wall, and the lights are also usually arranged around the Great Wall. Shadows generated by the large quantity of lights are rendered, so that a real illumination effect of the Great Wall under the illumination of the large quantity of lights may be reflected. Specifically, the terminal may set a two-dimensional grid on a preset plane in a world space where a digital Great Wall scene is located. A plurality of light resources in the digital Great Wall scene are clustered based on cells in the two-dimensional grid, to obtain a light-source cluster corresponding to the cells. For each pixel point in the screen space, a target light-source cluster is determined from the plurality of light-source clusters. Illumination of the target light-source cluster is related to a pixel value of the pixel point. For each pixel point in the screen space, the terminal may determine light resource reachability information of the light resources in the target light-source cluster for the pixel point. During the shadow rendering, for each pixel point in the screen space, in a case that the target light-source cluster of the pixel point includes a light resource participating in shadow rendering, the light resource reachability information of the light resource participating in shadow rendering for the pixel point is determined. The shadow of the virtual scene is rendered based on the light resource reachability information of the light resource participating in shadow rendering for the pixel point, to obtain a shadow rendering result of the digital Great Wall. Therefore, through use of the shadow rendering method provided in this application, not only a real illumination effect of the digital Great Wall under illumination of the large quantity of lights is presented, but also efficiency of rendering a shadow in the digital Great Wall is improved.

For a game scene, the terminal may determine, for each pixel point in the screen space, a target light resource corresponding to the pixel point from a plurality of light resources in the game scene, a world space position of the pixel point in a world space where the game scene is located being in an illuminated space illuminated by the target light resource corresponding to the pixel point; perform ray tracing based on the world space position of the target light resource and the world space position of the pixel point, to obtain light resource reachability information of the target light resource for the pixel point, the light resource reachability information representing whether the light resource illuminates the world space position of the pixel point; and perform shadow rendering on the game scene based on the light resource reachability information, to obtain a shadow rendering result. In this way, efficiency of rendering a shadow in the game scene is improved.

For optimized rendering of a VR scene, the terminal may determine, for each pixel point in the screen space, a target light resource corresponding to the pixel point from a plurality of light resources in the VR scene, a world space position of the pixel point in a world space where the VR scene is located being in an illuminated space illuminated by the target light resource corresponding to the pixel point; perform ray tracing based on the world space position of the target light resource and the world space position of the pixel point, to obtain light resource reachability information of the target light resource for the pixel point, the light resource reachability information representing whether the light resource illuminates the world space position of the pixel point; and perform shadow rendering on the VR scene based on the light resource reachability information, to obtain a shadow rendering result. In this way, efficiency of rendering a shadow in the VR scene is improved.

Although the operations in the flowcharts involved in the foregoing embodiments are displayed in sequence as indicated by arrows, the operations are not necessarily performed in sequence as indicated by the arrows. Unless otherwise explicitly specified in this application, execution of the operations is not strictly limited, and the operations may be performed in another sequence. In addition, at least some operations in the flowcharts involved in the foregoing embodiments may include a plurality of operations or a plurality of stages. The operations or stages are not necessarily performed at a same moment, but may be performed at different moments. The operations or stages are not necessarily performed in sequence, but may be performed in turn or alternately with other operations or at least part of operations or stages in the other operations.

Based on the same inventive concept, an embodiment of this application further provides a shadow rendering apparatus for implementing the foregoing shadow rendering method. An implementation solution provided by the apparatus for resolving the problem is similar to the implementation solution described in the foregoing method. Therefore, for specific limitations on one or more embodiments of the shadow rendering apparatus provided below, reference may be made to the limitations on the shadow rendering method above. Details are not described herein again.

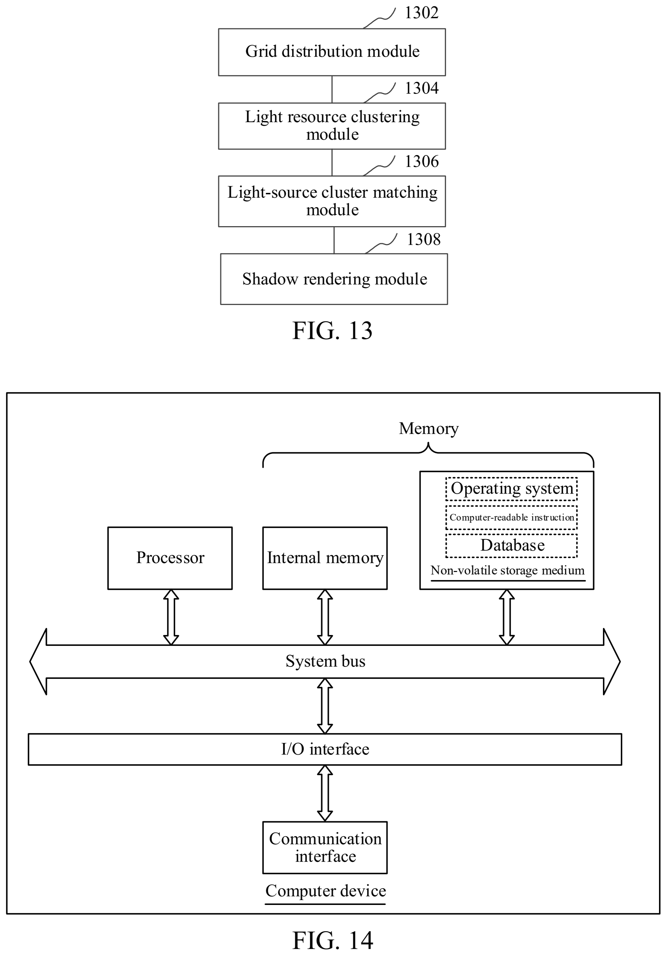

In some embodiments, as shown in FIG. 13, a shadow rendering apparatus is provided, including a grid distribution module 1302, a light resource clustering module 1304, a light-source cluster matching module 1306, and a shadow rendering module 1308.

The grid distribution module 1302 is configured to set a two-dimensional grid on a preset plane in a world space where a virtual scene is located.

The light resource clustering module 1304 is configured to cluster a plurality of light resources in the virtual scene through cells in the two-dimensional grid, to obtain a light-source cluster corresponding to the cells, a projection area of an illuminated space irradiated by the light resource in the light-source cluster on the preset plane intersecting with a corresponding cell.

The light-source cluster matching module 1306 is configured to determine, for each pixel point in a screen space, a target light-source cluster from the plurality of light-source clusters, illumination of the target light-source cluster being related to a pixel value of the pixel point.

The shadow rendering module 1308 is configured to render a shadow of the virtual scene based on the target light-source cluster of each pixel point, to obtain a shadow rendering result.

In some embodiments, the light resource clustering module 1304 is further configured to obtain, for each cell in the two-dimensional grid, the light-source cluster of the cell based on the light resource intersecting with the cell in the plurality of light resources, intersecting with the cell meaning that the projection area of the illuminated space on the preset plane intersects with the cell, and a quantity of light resources in the light-source cluster being less than or equal to a preset quantity.

In some embodiments, the light resource clustering module 1304 is further configured to: determine an intersecting light resource of the cell from the plurality of light resources in sequence, the intersecting light resource of the cell referring to a light resource where the projection area of the illuminated space on the preset plane intersects with the cell; add, in a case that a quantity of light resources included in a current light-source cluster of the cell is less than the preset quantity, the intersecting light resource to the current light-source cluster of the cell; perform the operation of determining the intersecting light resource of the cell from the plurality of light resources in sequence, until the plurality of light resources are traversed; and determine the current light-source cluster of the cell as the light-source cluster of the cell in a case that the plurality of light resources are traversed.

In some embodiments, the light resource clustering module 1304 is further configured to: determine an impact degree representation value of the intersecting light resource of the cell for the cell in a case that the quantity of light resources included in the current light-source cluster of the cell reaches the preset quantity; search the current light-source cluster of the cell for a first to-be-replaced light resource, an impact degree representation value of the first to-be-replaced light resource for the cell being less than an impact degree representation value of the intersecting light resource for the cell; and remove the found first to-be-replaced light resource from the current light-source cluster of the cell, and add the intersecting light resource to the current light-source cluster of the cell.

In some embodiments, the light resource clustering module 1304 is further configured to: determine a distance quantization value of the intersecting light resource of the cell, the distance quantization value being configured for representing a distance between the intersecting light resource of the cell and the cell; and determine the impact degree representation value of the intersecting light resource of the cell for the cell based on the distance quantization value, the impact degree representation value being negatively correlated with the distance quantization value.

In some embodiments, the light resource clustering module 1304 is further configured to: determine an attribute quantization value of the intersecting light resource of the cell, the attribute quantization value being determined based on an attribute of the intersecting light resource of the cell; and determine the impact degree representation value of the intersecting light resource of the cell for the cell based on the distance quantization value and the attribute quantization value.

In some embodiments, the quantity of light resources included in the light-source cluster is less than or equal to the preset quantity. The light resource clustering module 1304 is further configured to: determine a candidate light resource from the plurality of light resources in sequence, and determine, from the cells of the two-dimensional grid, a cell that intersects with the candidate light resource on the preset plane; add the candidate light resource to a current light-source cluster of the determined cell in a case that a quantity of light resources included in the current light-source cluster of the determined cell is less than the preset quantity; perform the operation of determining the candidate light resource from the plurality of light resources in sequence, until the plurality of light resources are traversed; and determine the current light-source cluster of each cell in the two-dimensional grid as the light-source cluster of each cell after the plurality of light resources are traversed.

In some embodiments, the light resource clustering module 1304 is further configured to: determine an impact degree representation value of the candidate light resource for the determined cell in a case that the quantity of light resources included in the current light-source cluster of the determined cell reaches the preset quantity; search the current light-source cluster of the determined cell for a second to-be-replaced light resource, an impact degree representation value of the second to-be-replaced light resource for the determined cell being less than an impact degree representation value of the candidate light resource for the determined cell; and remove the found second to-be-replaced light resource from the current light-source cluster of the determined cell, and add the candidate light resource to the current light-source cluster of the determined cell.

In some embodiments, the light-source cluster matching module 1306 is further configured to: determine a world space position of the pixel point; determine a cell to which a projection position of the world space position of the pixel point on the preset plane belongs, to obtain a target cell; and determine a light-source cluster corresponding to the target cell as a target light-source cluster whose illumination is related to the pixel value of the pixel point.

In some embodiments, the shadow rendering module 1308 is further configured to: determine, for each pixel point in the screen space in a case that the target light-source cluster of the pixel point includes a light resource participating in shadow rendering, light resource reachability information of the light resource participating in shadow rendering for the pixel point; and render the shadow of the virtual scene based on the light resource reachability information of the light resource participating in shadow rendering for the pixel point, to obtain the shadow rendering result.

In some embodiments, the shadow rendering module 1308 is further configured to: determine cluster reachability information of the pixel point, the cluster reachability information of the pixel point including the light resource reachability information of the light resources in the target light-source cluster of the pixel point for the pixel point; and search the cluster reachability information of the pixel point for the light resource reachability information of the light resource participating in shadow rendering for the pixel point.

In some embodiments, the shadow rendering module 1308 is further configured to: determine the light resource reachability information of the light resources in the target light-source cluster of the pixel point for the pixel point; and combine light resource reachability information of the light resources in the target light-source cluster of the pixel point for the pixel point into cluster reachability information of the pixel point.

All or a part of the modules in the foregoing shadow rendering apparatus may be implemented by a software, a hardware, or a combination thereof. The foregoing modules may be built in or independent of a processor of a computer device in a form of hardware, or may be stored in a memory of the computer device in a form of software, for the processor to invoke to execute operations corresponding to the foregoing modules.

In some embodiments, a computer device is provided. The computer device may be a server. An internal structure diagram of the computer device may be shown in FIG. 14. The computer device includes a processor, a memory, an input/output (I/O for short) interface, and a communication interface. The processor, the memory, and the I/O interface are connected through a system bus, and the communication interface is connected to the system bus through the I/O interface. The processor of the computer device is configured to provide computing and control capabilities. The memory of the computer device includes a non-volatile storage medium and an internal memory. The non-volatile storage medium has an operating system, a computer-readable instruction, and a database stored therein. The internal memory provides an environment for running of the operating system and the computer-readable instruction in the non-volatile storage medium. The database of the computer device is configured to store data involved in a shadow rendering method. The I/O interface of the computer device is configured to exchange information between the processor and the external device. The communication interface of the computer device is configured to connect to and communicate with an external terminal through a network. The computer-readable instruction, when executed by the processor, implements a shadow rendering method.

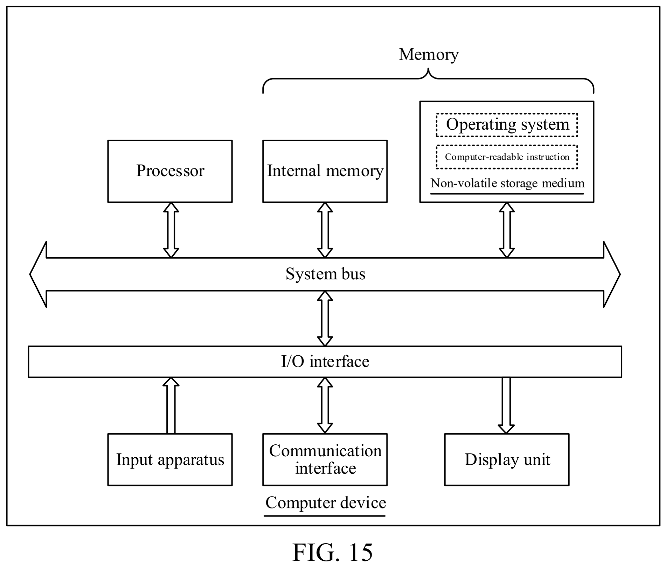

In some embodiments, a computer device is provided. The computer device may be a terminal, and an internal structure diagram thereof may be shown in FIG. 15. The computer device includes a processor, a memory, an I/O interface, a communication interface, a display unit, and an input apparatus. The processor, the memory, and the I/O interface are connected through a system bus. The communication interface, the display unit, and the input apparatus are connected to the system bus through the I/O interface. The processor of the computer device is configured to provide computing and control capabilities. The memory of the computer device includes a non-volatile storage medium and an internal memory. The non-volatile storage medium has an operating system and a computer-readable instruction stored therein. The internal memory provides an environment for running of the operating system and the computer-readable instruction in the non-volatile storage medium. The I/O interface of the computer device is configured to exchange information between the processor and the external device. The communication interface of the computer device is configured to perform wired or wireless communication with an external terminal. The wireless communication may be implemented through Wi-Fi, a mobile cellular network, near field communication (NFC), or another technology. The computer-readable instruction, when executed by the processor, implements a shadow rendering method. The display unit of the computer device is configured to form a visually visible picture, and may be a display screen, a projection apparatus, or a virtual reality imaging apparatus. The display screen may be a liquid crystal display screen or an electronic ink display screen. The input apparatus of the computer device may be a touch layer covering the display screen, or may be a key, a trackball, or a touch pad arranged on a housing of the computer device, and may further be an external keyboard, a touch pad, a mouse, or the like.

A person skilled in the art may understand that, FIG. 14 and FIG. 15 are merely block diagrams of partial structures related to the solution of this application, and do not constitute a limitation to the computer device to which the solution of this application is applied. Specifically, the computer device may include more components or fewer components than those shown in the figure, or some components may be combined, or a different component arrangement may be used.

In some embodiments, a computer device is provided, including a memory and a processor, the memory having a computer-readable instruction stored therein, the processor, when executing the computer-readable instruction, implementing the operations of the foregoing shadow rendering method.

In some embodiments, a computer-readable storage medium is provided, having a computer-readable instruction stored therein, the computer-readable instruction, when executed by a processor, implementing the operations of the foregoing shadow rendering method.

In some embodiments, a computer program product is provided, including a computer-readable instruction, the computer-readable instruction, when executed by a processor, implementing the operations of the foregoing shadow rendering method.

User information (including, but not limited to, user device information, user personal information, and the like) and data (including, but not limited to, data for analysis, stored data, displayed data, and the like) involved in this application are all information and data authorized by users or fully authorized by all parties, and collection, use, and processing of relevant data need to comply with relevant laws, regulations, and standards of relevant countries and regions.

A person of ordinary skill in the art may understand that all or some of processes of the method in the foregoing embodiments may be performed through a computer-readable instruction to instruct relevant hardware. The computer-readable instruction may be stored in a non-volatile computer-readable storage medium. When the computer-readable instruction is executed, the processes of the foregoing method embodiments may be included. Any reference to a memory, a database, or another medium used in the embodiments provided in this application may include at least one of a nonvolatile memory or a volatile memory. The non-volatile memory may include a read-only memory (ROM) a magnetic tape, a floppy disk, a flash memory, an optical memory, a high density embedded non-volatile memory, a resistive memory (ReRAM), a magnetoresistive random access memory (MRAM), a magnetoresistive random access memory (FRAM), a phase change memory (PCM), a graphene memory, and the like. The non-volatile memory may include a random access memory (RAM) an external cache, or the like. As an illustration rather than a limitation, the RAM is available in various forms, such as a static random access memory (SRAM) or a dynamic random access memory (DRAM). The database involved in the embodiments provided in this application may include at least one of a relational database or a non-relational database. The non-relational database may include a blockchain-based distributed database, or the like, but is not limited thereto. The processor involved in the embodiments provided in this application may be a general-purpose processor, a central processing unit, a GPU, a digital signal processor, a programmable logic device, a quantum computing-based data processing logic device, or the like, which is not limited thereto.

Technical features of the foregoing embodiments may be combined in different manners to form other embodiments. To make the description concise, not all possible combinations of the technical features in the foregoing embodiments are described. However, the combinations of these technical features are considered as falling within the scope recorded in this specification provided that no conflict exists.

The foregoing embodiments only describe several implementations of this application, which are described specifically and in detail, but cannot be construed as a limitation to the patent scope of this application. For a person of ordinary skill in the art, some transformations and improvements may be made without departing from the idea of this application. These transformations and improvements belong to the protection scope of this application. Therefore, the protection scope of the patent of this application is subject to the appended claims.

## Claims

1. A shadow rendering method, performed by a computer device, the method comprising:
obtaining a two-dimensional grid on a preset plane in a world space where a virtual scene is located;
for each of one or more cells of the two-dimensional grid, determining, from one or more light sources in the virtual scene, a light-source group corresponding to the cell to obtain one or more light-source groups, wherein a projection area of an illuminated space of a light source in the light-source group corresponding to the cell on the preset plane intersects with the cell;
determining, for each pixel point in a screen space of the virtual scene, a target light-source group from the one or more light-source groups, illumination of the target light-source group being related to a pixel value of the pixel point; and
performing, in the screen space, shadow rendering of the virtual scene based on the target light-source group of each pixel point, to obtain a shadow rendering result.

2. The method according to claim 1, wherein the for each of one or more cells of the two-dimensional grid, determining, from one or more light sources in the virtual scene, a light-source group corresponding to the cell to obtain one or more light-source groups comprises:
obtaining, for each cell in the two-dimensional grid, the light-source group of the cell based on a light source intersecting with the cell in the one or more light sources,
a quantity of light sources in the light-source group being less than or equal to a preset quantity.

3. The method according to claim 1 or 2, wherein the obtaining the light-source group of the cell based on a light source intersecting with the cell in the one or more light sources comprises:
performing an operation of determining, for each light source in the one or more light resources, whether the light source is an intersecting light source of the cell in sequence, the intersecting light source of the cell being a light source with an illuminated space of which the projection area on the preset plane intersects with the cell;
adding, in a case that a quantity of light sources comprised in a current light-source group of the cell is less than a preset quantity, the determined intersecting light source to the current light-source group of the cell;
performing the operation of determining until the one or more light sources are traversed; and
determining the current light-source group of the cell as the light-source group of the cell in a case that the one or more light sources are traversed.

4. The method according to any one of claims 1 to 3, further comprising:
determining an impact degree representation value on the cell of each intersecting light-source source of the cell in a case that the quantity of light-source sources comprised in a current light-source group of the cell reaches the preset quantity;
retrieving, in the current light-source group of the cell, a first to-be-replaced light source, an impact degree representation value of the first to-be-replaced light-source source on the cell being less than an impact degree representation value of a new intersecting light-source source which is not comprised in the current light-source group; and
replacing the retrieved first to-be-replaced light source by the new intersecting light source in the current light-source group of the cell.

5. The method according to any one of claims 1 to 4, wherein the determining an impact degree representation value of each intersecting light source of the cell on the cell comprises:
determining a distance quantization value of each intersecting light source of the cell, the distance quantization value being configured to represent a distance between the intersecting light source of the cell and the cell; and
determining the impact degree representation value of each intersecting light source of the cell on the cell based on the distance quantization value, the impact degree representation value being negatively correlated with the distance quantization value.

6. The method according to any one of claims 1 to 5, wherein the determining the impact degree representation value of each intersecting light source of the cell on the cell based on the distance quantization value comprises:
determining an attribute quantization value of each intersecting light source of the cell, the attribute quantization value being determined based on an attribute of the intersecting light source of the cell; and
determining the impact degree representation value of each intersecting light source of the cell on the cell based on the distance quantization value and the attribute quantization value.

7. The method according to any one of claims 1 to 6, wherein the quantity of light sources comprised in the light-source group is less than or equal to the preset quantity; and
the for each of one or more cells of the two-dimensional grid, determining, from one or more light sources in the virtual scene, a light-source group corresponding to the cell to obtain one or more light-source groups comprises:
determining each light source from the one or more light sources as a candidate light source in sequence; and
for each candidate light source, determining, from the cells of the two-dimensional grid, a cell that intersects with the candidate light source on the preset plane, and adding the candidate light source to a current light-source group of the determined cell in a case that a quantity of light sources comprised in the current light-source group of the determined cell is less than the preset quantity;
performing the operation of determining the candidate light source from the one or more light sources in sequence, until the one or more light sources are traversed; and
determining the current light-source group of each cell in the two-dimensional grid as the light-source group of each cell after the one or more light sources are traversed.

8. The method according to any one of claims 1 to 7, further comprising:
determining an impact degree representation value of each candidate light source for the determined cell in a case that the quantity of light sources comprised in the current light-source group of the determined cell reaches the preset quantity;
retrieving, in the current light-source group of the determined cell, a second to-be-replaced light source, an impact degree representation value of the second to-be-replaced light source for the determined cell being less than an impact degree representation value of a to-be-added candidate light source that is not comprised in the current light-source group of the determined cell; and
replacing the retrieved second to-be-replaced light source by the to-be-added candidate light source in the current light-source group of the determined cell.

9. The method according to any one of claims 1 to 8, wherein the determining, for each pixel point in a screen space of the virtual scene, a target light-source group from the one or more light-source groups comprises:
determining a world-space position of the pixel point;
determining a cell, to which a projection position of the world-space position of the pixel point on the preset plane belongs, as a target cell; and
determining a light-source group corresponding to the target cell as a target light-source group whose illumination is related to the pixel value of the pixel point.

10. The method according to any one of claims 1 to 9, wherein the performing, in the screen space, shadow rendering of the virtual scene based on the target light-source group of each pixel point, to obtain a shadow rendering result comprises:
determining, for each pixel point in the screen space in a case that the target light-source group of the pixel point comprises a light source for shadow rendering, light source reachability information of the light source for shadow rendering, the light source reachability information representing whether the light source for shadow rendering illuminates the world-space position of the pixel point; and
performing shadow rendering of the virtual scene in the screen space based on the light source reachability information of the light source for the shadow rendering, to obtain the shadow rendering result.

11. The method according to any one of claims 1 to 10, wherein the determining light source reachability information of the light source for shadow rendering on the pixel point comprises:
determining group reachability information of the pixel point, the group reachability information of the pixel point comprising light source reachability information of each light source in the target light-source group of the pixel point on the pixel point; and
retrieving the group reachability information of the pixel point for the light source reachability information of the light source for shadow rendering on the pixel point.

12. The method according to any one of claims 1 to 11, wherein the determining group reachability information of the pixel point comprises:
determining, for each light source in the target light-source group of the pixel point, the light source reachability information on the pixel point; and
combining the determined light source reachability information to obtain the group reachability information of the pixel point.

13. A shadow rendering apparatus, comprising:
a grid distribution module, configured to obtain a two-dimensional grid on a preset plane in a world space where a virtual scene is located;
a light resource grouping module, configured to, for each of one or more cells of the two-dimensional grid, determine, from one or more light sources in the virtual scene, a light-source group corresponding to the cell to obtain one or more light-source groups, wherein a projection area of an illuminated space of a light source in the light-source group corresponding to the cell on the preset plane intersects with the cell;
a light-source group matching module, configured to determine, for each pixel point in a screen space of the virtual scene, a target light-source group from the one or more light-source groups, illumination of the target light-source group being related to a pixel value of the pixel point; and
a shadow rendering module, configured to perform, in the screen space, shadow rendering of the virtual scene based on the target light-source group of each pixel point, to obtain a shadow rendering result.

14. A computer device, comprising a memory and a processor, the memory having a computer-readable instruction stored therein, the processor, when executing the computer-readable instruction, implementing the method according to any one of claims 1 to 12.

15. A computer-readable storage medium, having a computer-readable instruction stored therein, the computer-readable instruction, when executed by a processor, implementing the method according to any one of claims 1 to 12.

16. A computer program product, comprising a computer-readable instruction, the computer-readable instruction, when being executed by a processor, implementing the method according to any one of claims 1 to 12.
